# EUROPEAN PATENT APPLICATION

(11) **EP 2 000 493 A1**
(43) Date of publication of application: **10.12.2008**
(21) Application number: 06761448.7
(22) Date of filing: 17.07.2006
(51) Int. Cl.: C08G 65/40

(54) **THE METHOD OF SYNTHESIZING POLYETHER ETHERKETONE USING SULFOLANE AS SOLVENT**

(30) Priority: 28.03.2006 CN 200610016718
(71) Applicant: Wu, Zhongwen, Chaoyang District, Changchun, Jilin 130062 (CN)
(72) Inventor: WU, Zhongwen, Chaoyang District, Changchun, Jilin 130062 (CN); ZHAO, Donghui, Chaoyang District, Changchun, Jilin 130062 (CN)
(74) Representative: HOFFMANN EITLE
(86) International application number: PCT/CN2006/001704
(87) International publication number: WO 2007/109932

(57) **Abstract**

The method of preparing two kinds of polyether ether ketone with different terminal groups using sulfolane as solvent, which includes: adding 4,4'-difluorobenzophenone and hydroquinone in turn into the sulfolane solvent, the amount of the 4,4'-difluorobenzophenone is more (or less) than the amount of the hydroquinone by 0.1-1%, then adding xylene, beginning stirring and heating, as temperature arriving at 75-85°C, adding the mixing salts of sodium carbonate and potassium carbonate, while temperature arriving at 230-260°C, holding reaction for 1-3 hours, and pouring the reaction product into cool water, cooling and solidifying, then grounding and filtrating, repeated boiling the solid product in deionized water, until the solvent and by-product salt being removed thoroughly, then drying the finished powder in the oven, finally obtaining the fluoro-terminated(phenyl-terminated) polyether ether ketone. In the present invention, water-soluble sulfolane is used to instead of the water-insoluble diphenyl sulfone generally used in the prior arts as polymerization solvent, so that finishing effect can be achieved by only applying water processing in the finishing process, thereby two kinds of polyether ether ketone having different terminal groups are obtained.

## Description

### Field of the Invention

The present invention pertains to field of polymeric materials, and specifically, relates to a method of preparing poly ether ether ketone resin using a polar solvent, especially sulfolane.

### Description of the Related Art

Poly aryl ether ketone polymers have a series of excellent comprehensive properties in combination such as high temperature resistance, high strength, anti-irradiation and so on. The earliest commercial product of such polymers is well-known polyether ether ketone (PEEK) resin which was firstly put into the market by ICI Corporation (U.K.) in 1981. In a patent concerning the preparation method of the polyether ether ketone resin, a high temperature solvent, diphenylsulfone was specifically used. Since the reaction temperature for polymerization is more than 300°C, to which no other solvents could be suitable. All the subsequent patents concerning polyaryl ether ketones also use this solvent. We also used this conventional high temperature solvent in the related patents previously (for example, CN97101168.0, Synthesis of biphenyl structure-containing polyether ether ketone resin with high viscosity; CN97102708.0, Synthesis of biphenyl structure-containing polyether ether ketone ketone resin with high viscosity; and CN01138739.4, Preparation of polyaryl ether ketone copolymer).

There are two disadvantages as described below for this preparation method. Firstly, in the refine process, since the solvent is water insoluble, it is necessary to remove the solvent diphenyl sulfone by extracting with an organic solvent (e.g., acetone, ethanol etc.) many times (generally 8 to 10 times) previously, and then to remove by-product salt by extracting with water many times (8 to 10 times was also generally necessary), thus the desirable pure PEEK can be obtained. As a result, the production cost is undoubtedly increased to a great extent due to the long process and consumption of large amount of acetone and ethanol. Secondly, since both acetone and ethanol are flammable and explosive reagents, not only special explosive-proof plant should be set up, but also there is risk during the transportation, storage and operation.

In our research on polyether sulfone (PES) resin, sulfolane is always used as solvent. Only a water extracting procedure (generally 8 to 10 times) is necessary in the refine process to simultaneously remove solvent sulfolane and by-product salt completely, since sulfolane is water-miscible, and pure resin can be obtained.

Based on this, we break through traditional conceptions and attempt to use water-soluble high temperature solvent instead of the conventional water-insoluble diphenylsulfone for synthesizing polyether ether ketone resin, and after experiencing the failure using water-soluble solvent such as dimethyl sulfone, N-methyl pyrrolidone and the like, we synthesized polyether ether ketone polymer successfullv under suitable conditions by utilizing water-soluble sulfolane as solvent. The method fundamentally overcomes two unfavorable factors caused by conventional water-insoluble diphenylsulfone as solvent in the synthesizing polyaryl ether ketones polymers, and accomplished the present invention

### Disclosure of the Invention

An object of the present invention is to provide a preparation method which adopts water-soluble sulfolane instead of the water-insoluble diphenyl sulfone generally used in the prior arts as polymerization solvent. Therefore, polyether ether ketone resin products can be obtained with excellent refining effect by only utilizing water treatment in refine process, without the need of refining by utilizing organic solvent after the completion of polymerization.

The reaction scheme of the present invention are as follows:

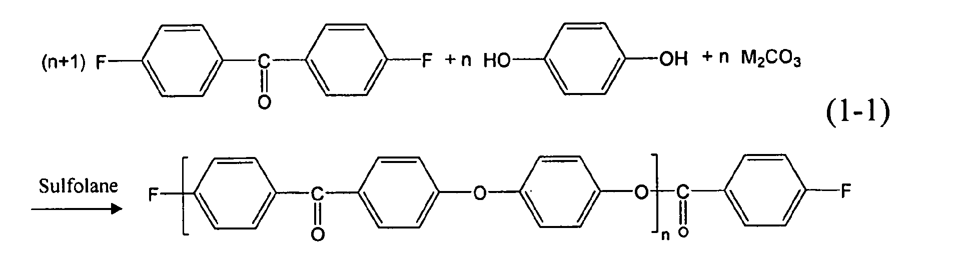

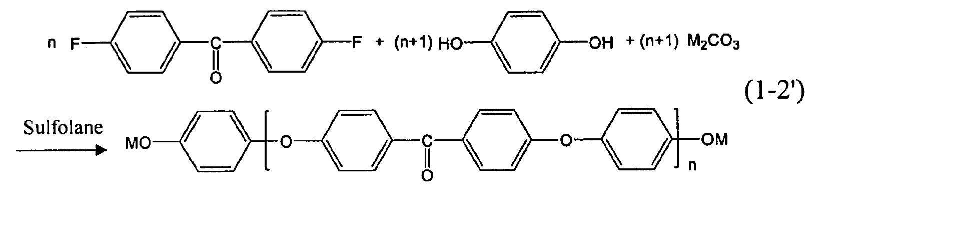

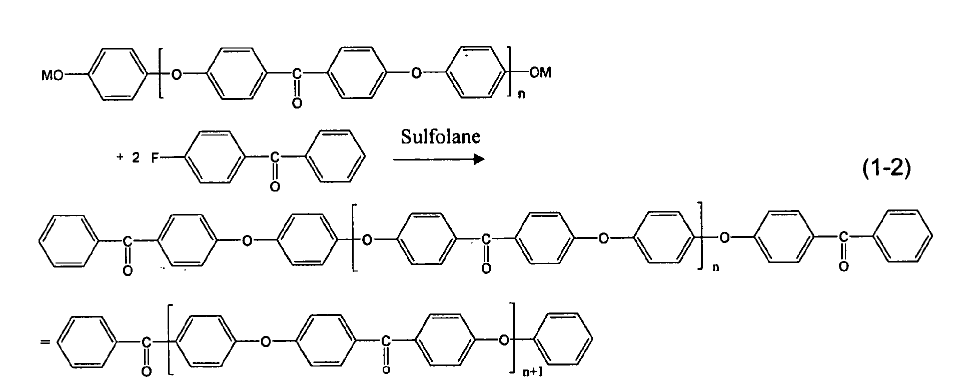

The fluoro-terminated polyether ether ketone is prepared by the equation (1-1).

The phenyl-terminated polyether ether ketone is prepared by the equation (1-2).

In the above scheme, the equation (1-2') is an intermediate stage of the reaction equation (1-2); n is an integer of 1 or more; and M represents K or Na.

Generally, mixed salts of K and Na are used, in which the proportion of mole number of one salt is arbitrary value between 10% and 90% of total mole number of the mixed salts.

The method of synthesizing the fluoro-terminated polyether ether ketone resin in equation (1-1) comprises:
Charging an organic solvent sulfolane to a three-necked reaction flask provided with a stirrer, a thermometer, a nitrogen inlet, and a reflux condenser.

Sequentially adding 4,4'-difluorobenzophenone and hydroquinone, wherein the mole number of 4,4'-difluorobenzophenone is 0.1 to 1.0% excess in respect to hydroquinone, and solid content(i.e., ratio of the mass of polymer produced to the total mass of solvent and polymer) in the system is 15 to 30%.

Further adding xylene which is 10-20% by mass of organic solvent, beginning stirring and heating the reaction system to fully dissolve the above monomers.

Adding the mixed salts of alkali metal carbonates K₂CO₃ and Na₂CO₃ whose mole number is more than that of hydroquinone by 1-5% and in which the mole number of K₂CO₃ is 10% to 90% of total mole number of the mixed salts, as temperature arriving at 75-85 °C.

Further increasing the temperature of the system to azeotropic refluxing temperature of xylene and water.

Stopping the reflux and starting the distillation of xylene, when xylene in reflux tube began to become fully clear after all water produced by the reaction was entrained via azeotropism.

While temperature of the system arriving at 230-260°C, holding reaction for 1-3 hours, and then terminating the reaction.

Pouring the reaction product into cold water to cool and solidify, and pulverizing and filtrating to obtain solid product.

Repeatedly boiling the solid product in deionized water as much as 10 times of the product many times (8 to 10 times) until all solvent and by-product salt being removed thoroughly; and then drying the finished powder in the oven to obtain the fluoro-terminated polyether ether ketone resin shown in the equation (1-1) of the present invention.

The method of synthesizing the phenyl-terminated polyether ether ketone resin in equation (1-2) is same as the above method of synthesizing the fluoro-terminated polyether ether ketone resin, except that the addition quantity of hydroquinone is more than that of 4, 4'-difluorobenzophenone by 0.1 to 1 mol% when charging starting materials, and after holding the reaction at 230°C-260°C for 1 to 2 hours, 4-fluorobenzophenone whose mole number is two times of the excessive mole number of hydroquinone is added, and the reaction is terminated after further reacting for 0.2 to 1 hour.

### Detailed Description of the Invention

### Example 1

To a three-necked reaction flask provided with a thermometer, a nitrogen inlet, a reflux condenser ,a water trap and a stirrer, 490g of refined sulfolane was firstly added, and then 67.11g (0.303mol, with the excess of 1% in respect to 0.3mol of hydroquinone, that is, 0.30 mol+0.30 mol x 1%=0.303mol) of 4,4'-difluorobenzophenone 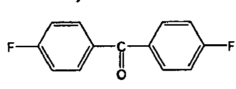 ) and 33.03g(0.30 mol) of hydroquinone( 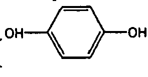 ) were sequentially added (where 86.4g of polymer were obtained, and solid content was 15%). After 74g of xylene (15% of solvent) was added thereto, the mixture was stirred and heated (the reaction flask was placed in the electrical heating jacket). When all materials were dissolved and the temperature was increased up to 80°C, 25.73g (0.153mol, with the excess of 2%) of K₂CO₃ and 16.2g(0.153mol, with the excess of 2%) of NaCO₃ were added. The temperature was further increased up to 150°C and at this point, the system was subjected to azeotropism. Xylene and water were condensed in water trapper, and xylene in the upper layer was refluxed, water in the lower layer was removed continually. When recovered water reached the theoretical quantity, xylene in top layer became clear. Xylene was distilled out from the system after further refluxing for 20 minutes, and the temperature of the system was continually increased by heating. When the temperature reached 260°C, the constant temperature was kept. The viscosity of the system was continually increased with the polymerization reaction proceeding. The reaction was terminated after three hours. The thick liquid of polymer was poured into cold water to fully cool, and subsequently grounded with a pulverizer and filtrated. The resulting powdery materials and water were added into three-necked flask and boiled for one hour, and then filtrated. The boiling was so repeated 8 times until all solvent and by-product salt in the materials were removed.

The refined powdery materials were dried in the oven at 140°C for 12 hours, so that moisture content was below 0.5%, and the fluoro-terminated polyether ether ketone as shown in the equation (1-1) was obtained.

The result determined by DSC shows:
Tg=144°C, and
Tm=334°C.

The result of thermal stability of the product shows:
MI=21.3g/10min, which is measured after heating at 400°C for 5 min, and
MI=17.6g/10min, which is measured after heating at 400°C for 30 min.

The later MI is reduced by 17% in respect to the former MI.

### Example 2:

Same as in example 1, 490g of sulfolane was added into the same reactor, and then 65.46g(0.30mol) of 4,4'-difluorobenzophenone( 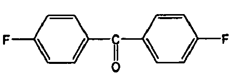 ) and 33.36g (0.303 mol) of hydroquinone( 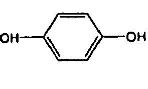 ) were sequentially added. Thereafter, the feeding order, the feeding amount and heating reactions were completely the same as those in Example 1, except that after reacting at the above constant temperature for 1.5 hours, 1.195g (0.006mol) of 4-fluorobenzophenone( 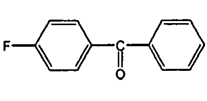 ) was added, and then the reaction was terminated after further reacting for 0.5 hours. The subsequent steps of finishing and drying were completely same as those in Example 1.

Finally, the phenyl-terminated polyether etherketone as shown in the equation (1-2) was obtained.

The result determind by DSC shows:
Tg=143°C, and
Tm=334°C.

The result of thermal stability of the product shows:
MI=18.6g/10min, which is measured after heating at 400°C for 5 min, and
MI=16.9g/10min, which is measured after heating at 400°C for 30 min.

The later MI is reduced by 9% in respect to the former MI. As compared with the reduction of 17% in example 1, the thermal stability is significantly improved.

## Claims

1. A method of synthesizing the fluoro-terminated polyether ether ketone resin using sulfolane as solvent, which comprises:
charging an organic solvent sulfolane to the reaction system;
sequentially adding 4,4'-difluorobenzophenone and hydroquinone, wherein the mole number of 4,4'-difluorobenzophenone is 0.1 to 1 mol% excess in respect to hydroquinone, and solid content in the system is 15 to 30%;
further adding xylene which is 10-20% by mass of organic solvent, beginning stirring and heating;
adding the mixed salts of alkali metal carbonates K₂CO₃ and Na₂CO₃ whose mole number is more than that of hydroquinone by 1-5 % and in which the mole number of K₂CO₃ is 10% to 90% of total mole number of the mixed salts, as temperature of the system arriving at 75-85°C;
while temperature of the system arriving at 230-260°C, holding reaction for 1-3 hours, and then terminating the reaction;
pouring the reaction product into cold water to cool and solidify, and grounding and filtrating to obtain solid product;
repeatedly boiling the solid product in deionized water until all solvent and by-product salt were thoroughly removed; and then
drying the finished powder in the oven to obtain the fluoro-terminated polyether etherketone resin.

2. A method of synthesizing a phenyl-terminated polyether ether ketone resin using sulfolane as solvent, which comprises:
charging an organic solvent sulfolane to the reaction system;
sequentially adding 4,4'-difluorobenzophenone and hydroquinone, wherein the mole number of hydroquinone is 0.1 to 1 mol% excess in respect to 4,4'-difluorobenzophenone, and solid content in the system is 15 to 30%;
further adding xylene which is 10-20% by mass of organic solvent, beginning stirring and heating;
adding the mixed salts of alkali metal carbonates K₂CO₃ and Na₂CO₃ whose mole number is more than that of hydroquinone by 1-5 % and in which the mole number of K₂CO₃ is 10% to 90% of total mole number of the mixed salts, as temperature of the system arriving at 75-85°C;
further elevating the temperature of the system to 230°C-260°C, holding the temperature and reacting for 1-2 hours;
adding 4-fluorobenzophenone whose mole number is two times of the excessive mole number of hydroquinone;
further reacting for 0.2 to 1 hour and then terminating the reaction;
pouring the reaction product into cold water to cool and solidify, and grounding and filtrating to obtain solid product;
repeatedly boiling the solid product in deionized water until all solvent and by-product salt were thoroughly removed; and then
drying the finished powder in the oven to obtain the phenyl-terminated polyether ether ketone resin.
